# EUROPEAN PATENT APPLICATION

(11) **EP 4 753 018 A1**
(43) Date of publication of application: **03.06.2026**
(21) Application number: 24922437.9
(22) Date of filing: 13.12.2024
(51) Int. Cl.: H01M 10/54, H01M 10/42, C22B 26/12

(54) **METHOD FOR RECYCLING POSITIVE ELECTRODE MATERIAL GENERATED AS PROCESS WASTE**

(30) Priority: 30.01.2024 KR 20240014376
(71) Applicant: ABR Co., Ltd, Gwangyang-si, Jeollanam-do 57759 (KR)
(72) Inventor: KIM, Sung Woo, Cheonan-si, Chungcheongnam-do 31169 (KR); SONG, Seung Hoan, Anyang-si, Gyeonggi-do 13903 (KR); YOO, Su Geun, Cheonan-si, Chungcheongnam-do 31169 (KR); JO, Hyeon Seok, Suncheon-si, Jeollanam-do 58006 (KR)
(74) Representative: v. Bezold & Partner Patentanwälte - PartG mbB
(86) International application number: PCT/KR2024/020308
(87) International publication number: WO 2025/164928

(57) **Abstract**

The present disclosure includes: a current collector separation step of treating a positive electrode determined as defective in a battery manufacturing process with an organic solvent to separate a current collector and a positive electrode active material layer; and a drying step of performing heat treatment on the positive electrode active material layer separated from the current collector, and can effectively recycle positive electrode material determined as waste in the battery manufacturing process.

## Description

### [Technical Field]

The present disclosure relates to a method of recycling positive electrode material generated or determined as process waste in a battery manufacturing process.

### [Background]

Generally, end-of-life batteries (EOL-BATTERY) are discarded. In the process of discarding the batteries, various harmful substances are emitted and valuable metals are lost. To solve these problems, technologies for recycling end-of-life batteries are being researched.

Meanwhile, positive electrode material waste is also generated in various forms during the process of manufacturing batteries. In the process of manufacturing batteries, inspections are performed on electrodes or batteries in various forms during manufacturing. When the inspection determines the electrodes or batteries as defective, they are generally discarded. Previous research focuses on technologies for recycling end-of-life batteries, and research on recycling positive electrode material generated as waste during the battery manufacturing process remains insufficient.

Therefore, there is a need for a technology to recycle positive electrode material determined as waste in the battery manufacturing process in an eco-friendly and efficient manner.

### [Summary]

### [Technical Problem]

The present disclosure is directed to providing a method of effectively recycling or reusing positive electrode material determined as waste in a battery manufacturing process, in order to solve the problems of the prior art as described above.

### [Technical Solution]

In order to solve the above-described problem, in one embodiment, a positive electrode recycling method according to the present disclosure includes: a current collector separation step of treating a positive electrode determined as defective in a battery manufacturing process with an organic solvent to separate a current collector and a positive electrode active material layer; and a drying step of performing heat treatment on the positive electrode active material layer separated from the current collector.

In one embodiment, the positive electrode recycling method includes, before the current collector separation step, a defect determination step of determining whether any one or more of an electrode and a battery is defective in the battery manufacturing process. Through the defect determination step, the electrode or battery determined as defective is targeted for recycling. The electrode is specifically a positive electrode, and the battery is specifically a lithium secondary battery.

In one embodiment, the defect determination step includes, when a battery is determined as defective: disassembling an exterior case of the battery; separating an electrode assembly into a positive electrode, a negative electrode, and a separator; and cleaning the separated positive electrode.

In another embodiment, the current collector separation step includes: an organic solvent immersion processing step of immersing a positive electrode in an organic solvent; and an ultrasonic separation processing step of applying ultrasonic waves.

The organic solvent immersion processing step and the ultrasonic separation processing step are performed together in a single process. The present disclosure does not exclude performing the ultrasonic separation processing step before or after based on the organic solvent immersion processing step.

Specifically, in the organic solvent immersion processing step, the organic solvent includes one or more selected from the group consisting of N-Methyl-2-pyrrolidone (NMP), acetone, ethanol, propylene carbonate, ethylmethyl carbonate, ethylene carbonate, and dimethyl carbonate. For example, the organic solvent includes N-Methyl-2-pyrrolidone (NMP). In addition, the organic solvent immersion processing step can be performed under conditions of 15°C to 50°C, conditions of 15°C to 30°C, or specifically a condition of 25°C.

The ultrasonic separation processing step can be performed by applying ultrasonic waves in a range of 20 kHz to 200 kHz for 5 minutes to 60 minutes.

The drying step can be performed under a temperature condition of 50°C to 300°C for 10 minutes to 120 minutes.

In one embodiment, a component obtained through the drying step is in a state of a mixture of positive electrode active material and conductive material.

As another example, a battery targeted for recycling in the present disclosure is a lithium secondary battery, specifically a medium- and large-sized lithium secondary battery.

### [Advantageous Effects]

The present disclosure can effectively recycle or reuse positive electrode material determined as waste in a battery manufacturing process.

### [Brief Description of the Drawings]

FIG. 1 is a schematic diagram showing a cross-sectional structure of a cylindrical battery.
FIG. 2 is a flowchart of a positive electrode recycling process according to one embodiment of the present disclosure.
FIG. 3 is a flowchart of a positive electrode recycling process according to another embodiment of the present disclosure.
FIG. 4 is a flowchart of a positive electrode recycling process according to yet another embodiment of the present disclosure.

### [Best Mode]

The present disclosure may have various modifications and various embodiments, and thus specific embodiments thereof will be described in detail below.

However, it should be understood that the present disclosure is not limited to the specific embodiments, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

Hereinafter, the present disclosure is described in more detail.

A positive electrode recycling method according to the present disclosure includes: a current collector separation step of treating a positive electrode determined as defective in a battery manufacturing process with an organic solvent to separate a current collector and a positive electrode active material layer; and a drying step of performing heat treatment on the positive electrode active material layer separated from the current collector.

Specifically, in the process of manufacturing a secondary battery, a process of inspecting electrodes or batteries is performed for each process. The present disclosure provides a method of effectively recycling a positive electrode classified as process waste. In the present disclosure, the current collector and the positive electrode active material layer are separated using an organic solvent. Specifically, the positive electrode is immersed in a storage tank containing the organic solvent. Through this, a binder component dispersed in the positive electrode active material layer is dissolved, and active material layer components are separated from the current collector. In addition, when the separated positive electrode active material layer removes the solvent by volatilization through drying, only solid content components remain. For example, the remaining solid content components are in a state of a mixture of positive electrode active material and conductive material.

The present disclosure includes, before the current collector separation step, a defect determination step of determining whether any one or more of an electrode and a battery is defective in the battery manufacturing process. In the present disclosure, the defect determination step includes all processes of manufacturing an electrode. Through the defect determination step, the electrode or battery determined as defective is targeted for recycling. The electrode is specifically a positive electrode, and the battery is specifically a lithium secondary battery.

In one embodiment, the defect determination step is a step of determining whether an electrode is defective. The electrode defect determination step includes, for example, a method of inspecting whether surface cracks exist through vision inspection, a method of inspecting a loading amount through weight measurement, and the like.

In another embodiment, the defect determination step is a step of determining whether an electrode assembly is defective. For example, in the case of a pouch-type battery, the step includes a method of vision inspection for mismatching of a stacked structure of a positive electrode, a separator, and a negative electrode. Alternatively, in the case of a cylindrical or prismatic battery, the step includes a method of vision inspection of a winding state of a wound jelly-roll electrode assembly.

In yet another embodiment, the defect determination step is a step of determining whether a battery is defective. Specifically, the step includes welding defect inspection between an electrode tab and an electrode lead (including vision inspection, low voltage inspection, ultrasonic wave application inspection, etc.), initial charge and discharge efficiency inspection, battery lifespan or efficiency inspection, and the like.

In one embodiment, the defect determination step includes, when a battery is determined as defective: disassembling an exterior case of the battery; separating an electrode assembly into a positive electrode, a negative electrode, and a separator; and cleaning the separated positive electrode.

When the battery is in a sealed state, the exterior case of the battery is released. As a method of releasing the exterior case, it can be performed using a punching press or a waterjet cutting machine. After separating the electrode assembly into the positive electrode, the negative electrode, and the separator, each can undergo a recycling or discard process individually. In addition, the separated positive electrode removes electrolyte through a cleaning process. As a cleaning method, for example, a method of performing using distilled water is included.

In one embodiment, the current collector separation step includes: an organic solvent immersion processing step of immersing a positive electrode in an organic solvent; and an ultrasonic separation processing step of applying ultrasonic waves.

The organic solvent immersion processing step and the ultrasonic separation processing step are performed together in a single process. The present disclosure does not exclude performing the ultrasonic separation processing step before or after based on the organic solvent immersion processing step. In terms of process efficiency, it was experimentally confirmed that it is advantageous to perform the organic solvent immersion processing step and the ultrasonic separation processing step together in a single process.

The organic solvent immersion processing step is for removing binder components by immersing the positive electrode in the organic solvent. Specifically, in the organic solvent immersion processing step, the organic solvent includes one or more selected from the group consisting of N-Methyl-2-pyrrolidone (NMP, N-Methyl-2-pyrrolidone), acetone, ethanol, propylene carbonate, ethylmethyl carbonate, ethylene carbonate, and dimethyl carbonate. For example, the organic solvent includes N-Methyl-2-pyrrolidone (NMP). In addition, the organic solvent immersion processing step can be performed under conditions of 15°C to 50°C, conditions of 15°C to 30°C, or specifically a condition of 25°C.

The ultrasonic separation processing step can be performed by applying ultrasonic waves in a range of 20 kHz to 200 kHz for 5 minutes to 60 minutes. Specifically, conditions for applying the ultrasonic waves can be performed under frequency conditions of 120 kHz to 200 kHz and output conditions of 200 W to 600 W. In addition, the ultrasonic wave application time can be adjusted in a range of 5 minutes to 60 minutes, 5 minutes to 30 minutes, or 10 minutes to 20 minutes. The ultrasonic wave application time includes not only a case of continuously applying ultrasonic waves within the time but also a case of applying ultrasonic waves intermittently or periodically.

The drying step can be performed under a temperature condition of 50°C to 300°C for 10 minutes to 120 minutes. The drying step includes both a direct drying method using a heating wire and the like and an indirect drying method using hot air. For example, in the present disclosure, the drying step can be performed by hot air drying. Specifically, in the present disclosure, the drying step can be performed for 30 minutes to 80 minutes by supplying hot air in a temperature range of 100°C to 150°C. In the present disclosure, conditions for performing the drying step can be adjusted according to the state of the electrode or battery. However, the present disclosure performs the drying step in a relatively low temperature range, and heat treatment at a high temperature is not required. Through this, process costs and energy costs can be reduced, and deformation or loss of positive electrode material can be prevented during the recycling process.

The drying step is for removing organic solvents remaining in the separated positive electrode active material layer. For example, the drying step can be performed under conditions for volatilizing N-Methyl-2-pyrrolidone (NMP), which is an organic solvent.

In one example, a component obtained through the drying step is in a state of a mixture of positive electrode active material and conductive material. Through an additional process, the positive electrode active material and the conductive material can be separated. Alternatively, a method of reusing the positive electrode active material and the conductive material without separating them is also possible. A process of separating the positive electrode active material and the conductive material can be performed by a physical method. For example, separation by component is possible through particle size separation using a sieve, which is a method of removing conductive material particles by a physical method using particle diameter difference between active material particles and conductive material particles.

A battery targeted for recycling in the present disclosure is a lithium secondary battery, specifically a medium- and large-sized lithium secondary battery. The lithium secondary battery may include: an electrode assembly including a positive electrode, a negative electrode, and a separator interposed between the positive electrode and the negative electrode; a non-aqueous electrolyte impregnating the electrode assembly; and an exterior case containing the electrode assembly and the non-aqueous electrolyte.

The positive electrode includes a positive electrode active material layer formed on a positive electrode current collector. The positive electrode active material layer includes positive electrode active material, a binder, conductive material, and the like, and may further include a positive electrode additive commonly used in the art as necessary.

The positive electrode active material may be a lithium-containing oxide and may be the same or different. As the lithium-containing oxide, a lithium-containing transition metal oxide may be used.

For example, the lithium-containing transition metal oxide may be any one selected from the group consisting of LiₓCoO₂(0.5<x<1.3), LiₓNiO₂(0.5<x<1.3), LiₓMnO₂(0.5<x<1.3), LiₓMn₂O₄(0.5<x<1.3), Liₓ(NiₐCo_{b}Mn_{c})O₂(0.5<x<1.3, 0<a<1, 0<b<1, 0<c<1, a+b+c=1), LiₓNi_{1-y}Co_{y}O₂(0.5<x<1.3, 0<y<1), LiₓCo_{1-y}Mn_{y}O₂(0.5<x<1.3, 0≤y<1), LiₓNi_{1-y}Mn_{y}O₂(0.5<x<1.3, O≤y<1), Liₓ(NiₐCo_{b}Mn_{c})O₄(0.5<x<1.3, 0<a<2, 0<b<2, 0<c<2, a+b+c=2), LiₓMn_{2-z}Ni_{z}O₄(0.5<x<1.3, 0<z<2), LiₓMn_{2-z}Co_{z}O₄(0.5<x<1.3, 0<z<2), LiₓCoPO₄(0.5<x<1.3), and LiₓFePO₄(0.5<x<1.3), or a mixture of two or more thereof, and the lithium-containing transition metal oxide may be coated with a metal such as aluminum (Al) or a metal oxide. In addition, sulfides, selenides, halides, and the like may also be used in addition to the lithium-containing transition metal oxide.

The positive electrode according to the present disclosure can be applied to various types of lithium secondary batteries, but is preferably applicable to high-output batteries. The positive electrode active material layer of the present disclosure is applied to a high-nickel (High-Ni) NCM-based battery.

In a specific example, a positive electrode active material layer according to the present disclosure includes an active material component having a structure of Chemical Formula 1 below.

[Chemical Formula 1] Liₓ(NiₐCo_{b}Mn_{c})O₂

(0.5<x<1.3, 0.3<a<1, 0<b<0.5, 0<c<0.5, a+b+c=1)

In Chemical Formula 1, the a value is greater than 0.3, 0.6 or more, and specifically 0.8 or more. In Chemical Formula 1, when the a value increases, the b value and/or the c value decreases within a range satisfying the Chemical Formula 1 above. Through this, the positive electrode for a lithium secondary battery according to the present disclosure is applied to a high-nickel (High-Ni) NCM-based secondary battery. The NCM secondary battery is, for example, an NCM 622 or NCM 811 lithium secondary battery.

The current collector used for the positive electrode is a metal with high conductivity, and any metal to which a positive electrode active material slurry can be easily adhered, and which is non-reactive in a voltage range of an electrochemical device can be used. Specifically, non-limiting examples of the current collector for the positive electrode include a foil manufactured by aluminum, nickel, or a combination thereof.

The positive electrode active material may be included in a range of 94.0 wt % to 98.5 wt.% in the positive electrode active material layer. When a content of the positive electrode active material satisfies the range, it is advantageous in terms of manufacturing a high-capacity battery and providing sufficient conductivity of the positive electrode or adhesion between electrode materials.

As a binder, binders commonly used in the art can be used without limitation. For example, various types of binders such as poly(vinylidene fluoride-co-hexafluoropropylene) (PVDF-co-HFP), polyvinylidene fluoride (PVDF), polyacrylonitrile, polymethyl methacrylate, styrene-butadiene rubber (SBR), carboxyl methyl cellulose (CMC), and the like can be used.

The negative electrode includes a negative electrode active material layer formed on a negative electrode current collector. The negative electrode active material layer includes negative electrode active material, a binder, and conductive material, and may further include a negative electrode additive commonly used in the art as necessary.

The negative electrode active material may include a carbon material, lithium metal, silicon, tin, or the like. When a carbon material is used as the negative electrode active material, both low-crystallinity carbon and high-crystallinity carbon can be used. Representative examples of low-crystallinity carbon are soft carbon and hard carbon, and representative examples of high-crystallinity carbon are high-temperature calcined carbons such as natural graphite, Kish graphite, pyrolytic carbon, mesophase pitch-based carbon fiber, mesocarbon microbeads, mesophase pitches, and petroleum or coal tar pitch-derived cokes.

Non-limiting examples of the current collector used for the negative electrode include a foil manufactured by copper, gold, nickel, a copper alloy, or a combination thereof.

In addition, the negative electrode may include conductive material and a binder commonly used in the art.

In the present disclosure, the separator can be any porous substrate used in lithium secondary batteries, and for example, a polyolefin-based porous membrane or a nonwoven fabric can be used, but is not particularly limited thereto.

Examples of the polyolefin-based porous membrane include a membrane formed of a polyolefin-based polymer such as polyethylene such as high-density polyethylene, linear low-density polyethylene, low-density polyethylene, ultra-high molecular weight polyethylene, polypropylene, polybutylene, polypentene, and the like, each alone or a polymer mixture thereof.

As the nonwoven fabric, in addition to a polyolefin-based nonwoven fabric, for example, a nonwoven fabric formed of a polymer such as polyethyleneterephthalate, polybutyleneterephthalate, polyester, polyacetal, polyamide, polycarbonate, polyimide, polyetheretherketone, polyethersulfone, polyphenyleneoxide, polyphenylenesulfide, polyethylenenaphthalene, and the like, each alone or a polymer mixture thereof can be mentioned. The structure of the nonwoven fabric may be a spunbond nonwoven fabric or a melt-blown nonwoven fabric composed of long fibers.

The thickness of the porous substrate is not particularly limited, but may be 5 µm to 50 µm, and a pore size and porosity present in the porous substrate are also not particularly limited, but may be 0.01 µm to 50 µm and 10% to 95%, respectively.

Meanwhile, in order to improve mechanical strength of the separator composed of the porous substrate and suppress a short circuit between the positive electrode and the negative electrode, a porous coating layer including inorganic particles and a binder polymer may be further included on at least one surface of the porous substrate.

In the present disclosure, the non-aqueous electrolyte may include an organic solvent and an electrolyte salt, and the electrolyte salt is a lithium salt. As the lithium salt, those commonly used in non-aqueous electrolytes for lithium secondary batteries can be used without limitation. For example, as anions of the lithium salt, any one selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, CF₃(CF₂)₇SO₃⁻, CF₃CO₂⁻, CH₃CO₂⁻, SCN⁻, and (CF₃CF₂SO₂)₂N⁻⁻, or two or more thereof may be included.

As an organic solvent included in the non-aqueous electrolyte described above, those commonly used in non-aqueous electrolytes for lithium secondary batteries can be used without limitation, and for example, ether, ester, amide, linear carbonate, cyclic carbonate, and the like can be used each alone or in a mixture of two or more. Among them, a carbonate compound which is a cyclic carbonate, a linear carbonate, or a mixture thereof may be representatively included.

Injection of the non-aqueous electrolyte can be performed at an appropriate stage during the manufacturing process of an electrochemical device according to the manufacturing process and required physical properties of a final product. In other words, it can be applied before electrochemical device assembly or at a final stage of electrochemical device assembly.

### [Detailed Description]

Hereinafter, the present disclosure will be described in more detail through drawings and the like. However, the following drawings and the like are merely illustrative of the present disclosure, and the contents of the present disclosure are not limited thereto.

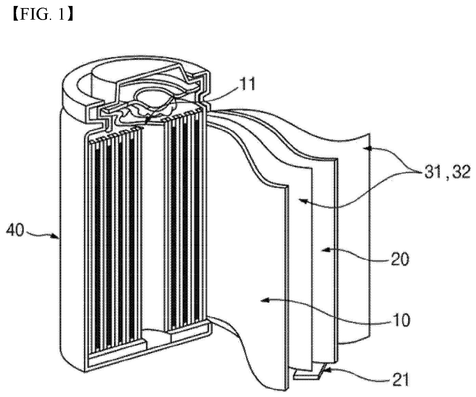

FIG. 1 is a schematic diagram showing a cross-sectional structure of a cylindrical battery. Referring to FIG. 1, the cylindrical battery includes an electrode assembly having a structure in which a positive electrode 10, a negative electrode 20, and separators 31 and 32 are alternately stacked and wound in a cylindrical form. A positive electrode tab 11 is formed on an upper end of a winding core of the electrode assembly, and a negative electrode tab 21 is formed on one side of a lower end of the electrode assembly. The electrode assembly is housed in a cylindrical battery case 40, and is sealed by covering an upper portion with a positive electrode cap in a state in which electrolyte is injected.

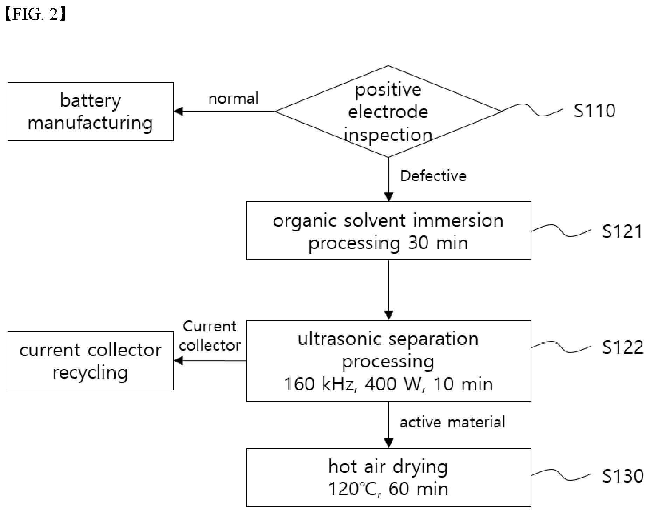

FIG. 2 is a flowchart of a positive electrode recycling process according to one embodiment of the present disclosure. Referring to FIG. 2, first, a positive electrode inspection (S110) step is performed. The positive electrode inspection (S110) step inspects, for example, whether surface cracks occur on a positive electrode that has undergone a drying process through vision inspection. When a degree of occurrence of surface cracks exceeds a reference value, it is determined as defective. Alternatively, the positive electrode inspection (S110) step determines whether there is a defect through, for example, weight inspection of the positive electrode. When determined as normal in the positive electrode inspection (S110) step, the positive electrode is transferred to a battery manufacturing process.

The positive electrode determined as defective in the positive electrode inspection (S110) step undergoes an organic solvent immersion processing (S121) step, which is a step of immersing the positive electrode in an organic solvent, in other words, NMP solvent. The organic solvent immersion processing (S121) step is performed for 30 minutes under room temperature conditions.

Then, the positive electrode undergoes an ultrasonic separation processing (S122) step. The ultrasonic separation processing (S122) is performed for 10 minutes under conditions of 160 kHz frequency and 400 W output.

Through the organic solvent immersion processing (S121) step and the ultrasonic separation processing (S122) step, a PVDF binder present in the positive electrode is removed, and the current collector and the positive electrode active material layer are separated. The separated current collector separately undergoes a current collector recycling process.

In addition, the separated active material components undergo a hot air drying (S130) step. The separated positive electrode active material layer is in a state in which solid content components are separated by particle. The separated positive electrode active material layer undergoes a hot air drying (S130) step of drying for 60 minutes by supplying hot air at 120°C. Through the hot air drying (S130) step, NMP solvent remaining in the positive electrode active material layer is removed.

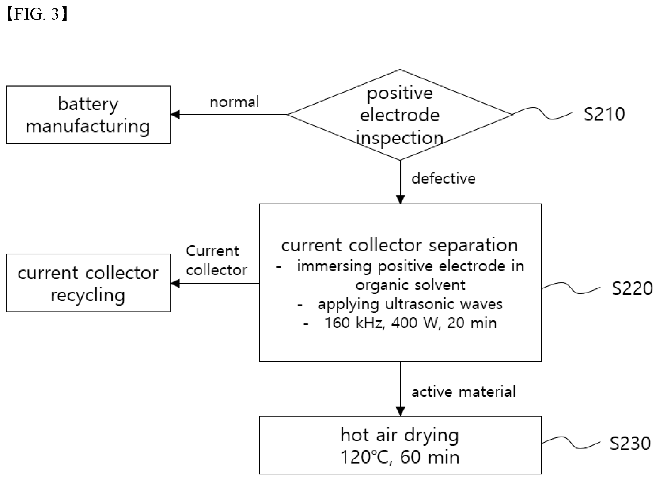

FIG. 3 is a flowchart of a positive electrode recycling process according to another embodiment of the present disclosure. Referring to FIG. 3, a positive electrode inspection (S210) step is performed. When determined as normal in the positive electrode inspection (S210) step, the positive electrode is transferred to a battery manufacturing process.

The positive electrode determined as defective in the positive electrode inspection (S210) step undergoes a current collector separation (S220) step. The current collector separation (S220) is performed by applying ultrasonic waves in a state in which a target positive electrode is immersed in an organic solvent, in other words, NMP solvent. The current collector separation (S220) step is performed for 20 minutes under room temperature conditions. The ultrasonic wave application is performed under conditions of 160 kHz frequency and 400 W output.

Through the current collector separation (S220) step, a PVDF binder present in the positive electrode is removed, and the current collector and the positive electrode active material layer are separated. The separated current collector separately undergoes current collector recycling process.

In addition, the separated active material components undergo a hot air drying (S230) step. The separated positive electrode active material layer is in a state in which solid content components are separated by particle. The separated positive electrode active material layer undergoes a hot air drying (S230) step of drying for 60 minutes by supplying hot air at 120°C.

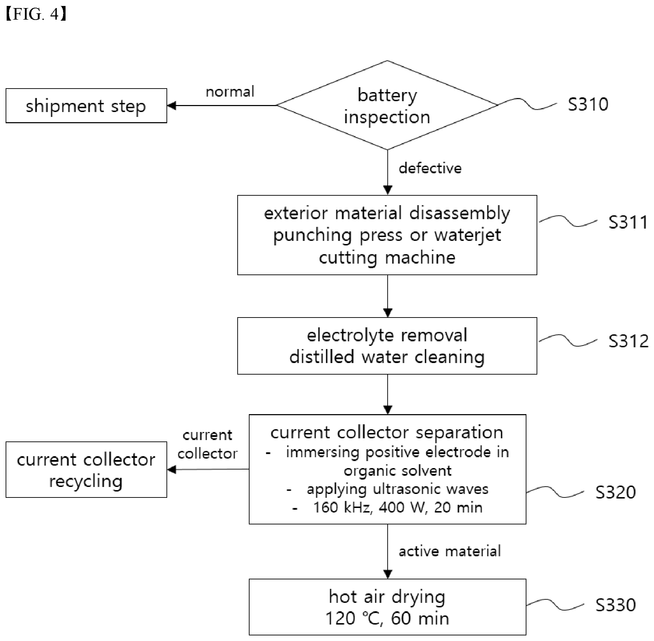

FIG. 4 is a flowchart of a positive electrode recycling process according to yet another embodiment of the present disclosure. Referring to FIG. 4, a battery inspection (S310) step is performed on a battery in a manufactured state or in a manufacturing process. The battery inspection (S310) step inspects, for example, whether welding between an electrode tab and an electrode lead has been performed properly. In this case, the battery inspection (S310) step can be performed through visual inspection, vision inspection, low voltage inspection, or the like. Alternatively, the battery inspection (S310) step determines whether there is a defect by checking whether a reference value is satisfied through, for example, visual inspection for electrolyte leakage of the battery, initial charge and discharge inspection, battery efficiency inspection, cycle characteristic inspection, or the like. When determined as normal in the battery inspection (S310) step, the battery is transferred to the next step for shipment.

A battery determined as defective undergoes, as necessary, an exterior material disassembly (S311) step. At this time, the exterior material disassembly (S311) step can be performed through a punching press, a waterjet cutting machine, or the like. After the exterior material disassembly (S311) step, the positive electrode is separated from the electrode assembly. The separated positive electrode undergoes an electrolyte removal (S312) step. The electrolyte removal (S312) step can be performed, for example, through distilled water cleaning.

The positive electrode from which electrolyte is removed undergoes a current collector separation (S320) step. The current collector separation (S320) is performed by applying ultrasonic waves in a state in which a target positive electrode is immersed in an organic solvent, in other words, NMP solvent. The current collector separation (S320) step is performed for 20 minutes under room temperature conditions. The ultrasonic wave application is performed under conditions of 160 kHz frequency and 400 W output.

Through the current collector separation (S320) step, a PVDF binder present in the positive electrode is removed, and the current collector and the positive electrode active material layer are separated. The separated current collector separately undergoes a current recycling process.

In addition, the separated active material components undergo a hot air drying (S330) step. The separated positive electrode active material layer is in a state in which solid content components are separated by particle. The separated positive electrode active material layer undergoes a hot air drying (S330) step of drying for 60 minutes by supplying hot air at 120°C.

While the present disclosure has been described with reference to exemplary embodiments thereof, it will be understood by those skilled in the art that various modifications and variations can be made therein without departing from the spirit and technical scope of the present disclosure as defined by the appended claims.

Therefore, the technical scope of the present disclosure should not be limited by the detailed description of the specification but should be determined by the appended claims.

The present disclosure is a result researched through the following national research and development project.
Project Unique Number: 2420005912
Project Number: RS-2024-00467315
Ministry Name: Ministry of SMEs and Startups
Project Management (Professional) Organization Name: Korea Technology and Information Promotion Agency for SMEs (TIPA)
Research Project Name: Startup Growth Technology Development (R&D)
Research Task Name: Product Development Technology for Remanufactured Positive Electrode Active Material Using Process Scrap
Task Performing Organization Name: ABR Co., Ltd
Research Period: 2024.08.01~2025.07.31

### [Description of Reference Numerals]

10: positive electrode
11: positive electrode tab
20: negative electrode
21: negative electrode tab
31, 32: separator
40: battery case

## Claims

1. A positive electrode recycling method, comprising:
a current collector separation step of treating a positive electrode determined as defective in a battery manufacturing process with an organic solvent to separate a current collector and a positive electrode active material layer; and
a drying step of performing heat treatment on the positive electrode active material layer separated from the current collector.

2. The positive electrode recycling method of claim 1, further comprising, before the current collector separation step,
a defect determination step of determining whether any one or more of an electrode and a battery is defective in the battery manufacturing process.

3. The positive electrode recycling method of claim 2, wherein the defect determination step further comprises, when a battery is determined as defective:
disassembling an exterior case of the battery;
separating an electrode assembly into a positive electrode, a negative electrode, and a separator; and
cleaning the separated positive electrode.

4. The positive electrode recycling method of claim 1, wherein the current collector separation step comprises:
an organic solvent immersion processing step of immersing a positive electrode in an organic solvent; and
an ultrasonic separation processing step of applying ultrasonic waves.

5. The positive electrode recycling method of claim 4, wherein the organic solvent immersion processing step and the ultrasonic separation processing step are performed together in a single process.

6. The positive electrode recycling method of claim 4, wherein, in the organic solvent immersion processing step, the organic solvent comprises one or more selected from the group consisting of N-Methyl-2-pyrrolidone (NMP), acetone, ethanol, propylene carbonate, ethylmethyl carbonate, ethylene carbonate, and dimethyl carbonate.

7. The positive electrode recycling method of claim 4, wherein the ultrasonic separation processing step is performed by applying ultrasonic waves in a range of 20 kHz to 200 kHz for 5 minutes to 60 minutes.

8. The positive electrode recycling method of claim 1, wherein the drying step is performed under a temperature condition of 50°C to 300°C for 10 minutes to 120 minutes.

9. The positive electrode recycling method of claim 1, wherein a component obtained through the drying step is in a state of a mixture of positive electrode active material and conductive material.
